Europäisches Patentamt

European Patent Office

Office européen des brevets

(19)

(11) EP 0 930 739 A2

(12) EUROPÄISCHE PATENTANMELDUNG

(43) Veröffentlichungstag:
21.07.1999 Patentblatt 1999/29

(51) Int Cl.⁶: **H04J 3/12**, H04Q 3/00

(21) Anmeldenummer: **99440006.7**

(22) Anmeldetag: **19.01.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.01.1998 DE 19801875**

(71) Anmelder: **ALCATEL**
**75008 Paris (FR)**

(72) Erfinder: **Weis, Bernd, Dr.**
**70825 Korntal-Münchingen (DE)**

(74) Vertreter: **Brose, Gerhard, Dipl.-Ing. et al**
**Alcatel**
**Intellectual Property Department, Stuttgart**
**Postfach 30 09 29**
**70449 Stuttgart (DE)**

(54) **Verfahren zur Einrichtung einer Verbindung in einem synchronen digitalen Nachrichtenübertragungsnetz und Netzelement**

(57)    Es soll ohne Beteiligung einer zentralen Managementeinrichtung eine Verbindung zwischen einem sendenden und einem ausgewählten Netzelement eines digitalen synchronen Nachrichtenübertragungsnetzes aufgebaut werden. Das Nachrichtenübertragungsnetz ist in mindestens zwei Multiplexschichten nach einer Hierarchie logisch strukturiert gemäß einem in dem Nachrichtenübertragungsnetz verwendeten Protokoll und jedes Netzelement hat auf zumindest einen Teil der Multiplexschichten Zugriff. Mittels eines von dem sendenden Netzelement an alle übrigen Netzelemente verschickten Rundrufs werden mögliche Pfade mit freier Übertragungskapazität zwischen dem sendenden und dem ausgewählten Netzelement identifiziert. Dazu wird zunächst geprüft, welche der Multiplexschichten für den Aufbau der Verbindung geeignet sind. Dann wird der Rundruf über bestehende Verbindungen der geeigneten Multiplexschichten weitergeleitet, auf die das jeweils weiterleitende Netzelement Zugriff hat. Anschließend wird die Verbindung über einen der identifizierten Pfade eingerichtet.

Fig. 5

**Beschreibung**

Die Erfindung betrifft ein Verfahren zum Aufbau einer Verbindung zwischen einem sendenden und einem ausgewählten Netzelement in einem digitalen Nachrichtenübertragungsnetz nach dem Oberbegriff des Anspruchs 1 sowie ein Netzelement nach Anspruch 16.

Aus dem Artikel ,,Distributed restoration in telecommunication networks" von D. Johnson et al. (BT Technol. J. Vol.12 No.2, April 1994, S.67-76) ist ein Verfahren zur verteilten Wiederherstellung von Verbindungen in einem Telekommunikationsnetz bekannt, das nach den Empfehlungen für SDH (synchronous digital hierarchy) arbeitet. Der Artikel beschreibt, daß eine Verbindung zwischen einem sendenden und einem ausgewählten Netzknoten ohne Eingreifen einer zentralen Managementeinrichtung aufgebaut wird. Dazu wird eine sogenannte "flood search" durchgeführt um automatisch alternative Pfade in dem Netz zu identifizieren, nachdem ein Ausfall einer Verbindung oder eines Netzknotens aufgetreten ist. Jeder Netzknoten besitzt eine eindeutige Identitätsnummer (NID). Fällt eine physikalische Verbindung zwischen zwei Netzknoten aus, so wird der Netzknoten mit der niedrigeren NID zum sendenden Netzknoten, der andere zum ausgewählten. Der sendende Netzknoten überträgt nun in einem Signatur-Zielfeld über all seine Ersatzleitungssysteme die NID des ausgewählten Netzknotens, d.h. er signalisiert seinen benachbarten Netzknoten die NID des ausgewählten Netzknotens als Ziel-Signatur. Die benachbarten Netzknoten verteilen die Ziel-Signatur weiter. Erreicht den ausgewählten Netzknoten eine solche Ziel-Signatur, so zeigt dies, daß ein Ersatzpfad zur Wiederherstellung der ausgefallenen Verbindung existiert. Der ausgewählte Netzknoten schickt nun über den so identifizierten Ersatzpfad eine Bestätigung. Aufgrund der Bestätigung wird eine physikalische Verbindung in allen Durchgangs-Netzknoten auf dem Ersatzpfad geschaltet.

Der Artikel erwähnt auch, daß dieses verteilte Verfahren zur Pfadfindung außer für Wiederherstellung ausgefallener Verbindungen auch für andere Anwendungen angewendet werden kann, wie z.B. zum Schalten einer Verbindung nach Anforderung durch einen Benutzer, zur Netzüberwachung und um Überlast zu vermeiden. Dabei kann auch ein Gewichtsfaktor berechnet werden, der die Auslastung von Netzknoten und Verbindungen berücksichtigt, um daraus eine Vergebühring zu bestimmen.

Das bekannte Verfahren weist den Nachteil auf, daß die freie Übertragungskapazität in dem Netz nicht optimal genutzt wird, da nur zwischen benachbarten Netzknoten eine Signalisierung möglich ist, d.h. nur Übertragungskapazität auf der physikalischen Ebene zwischen benachbarten Netzelementen steht als Ersatzleitungssystem für den Aufbau einer neuen Verbindung zur Verfügung. Ein anderer Nachteil besteht darin, daß erst durch eine Bestätigung der gefundene Pfad rückverfolgt werden muß, da er per se auch nachdem der ausgewählte Netzknoten die Ziel-Signatur empfangen hat, nicht bekannt ist. Als nachteilhaft kann sich auch auswirken, daß zwischen dem Identifizieren möglicher Pfade und dem Schalten der Verbindung einige Zeit verstreichen kann. Daher kann es vorkommen, daß ein identifizierter Pfad bereits belegt ist, wenn das ausgewählte Netzelement die Bestätigung zurückschickt und daß somit der Verbindungsaufbau scheitert. Bei dem bekannten Verfahren werden zudem geschützte Verbindungen und Punkt-zu-Mehrpunkt-Verbindungen nicht unterstützt.

Eine Aufgabe der Erfindung besteht darin, ein Verfahren zum Aufbau einer Verbindung in einem synchronen digitalen Nachrichtenübertragungsnetz anzugeben, das freie Übertragungskapazität des Netzes besser nutzt. Eine weitere Aufgabe der Erfindung ist es, ein Netzelement anzugeben, das zur Ausführung des Verfahrens geeignet ist.

Die Aufgabe wird hinsichtlich des Verfahrens gelöst durch die Merkmale des Anspruchs 1 und hinsichtlich des Netzelementes durch die Merkmale des Anspruchs 16. Vorteilhafte Ausgestaltungen sind den anhängigen Ansprüchen zu entnehmen.

Die Erfindung hat den Vorteil, daß Verbindungen automatisch und schnell, verglichen mit dem bisher üblichen zentralen Verbindungsaufbau, eingerichtet werden. Dadurch wird ein besserer Kundenservice möglich. Ebenso wird durch die Erfindung die Wiederherstellung ausgefallener Verbindungen beschleunigt. Ein weiterer Vorteil ist, daß ein schnelleres Reagieren auf wechselnde Auslastung des Netzes, beispielsweise durch ATM-Verkehr, möglich ist.

Ein anderer Vorteil besteht darin, daß die Netzlast durch Steuerinformationen, sogenannten Overhead, veringert wird.

Ein weiterer Vorteil besteht darin, daß die Erfindung einen Verbindungsaufbau durch Selbstwahl eines Benutzers (Kunden) ermöglicht, beispielsweise durch Anforderung der Verbindung über das Internet oder das World Wide Web (WWW). Zudem ermöglicht das erfindungsgemäße Verfahren einen vereinfachten Verbindungsaufbau zwischen zwei oder mehr unterschiedlichen Netzbetreibern oder zwischen unterschiedlichen Teilnetzen.

Die in Unteranspruch 8 angegebene besonders vorteilhafte Ausführung gewährleistet, daß ein für den Aufbau einer Verbindung als geeignet identifizierter Pfad beim Einrichten der Verbindung auch wirklich zur Verfügung steht und nicht zwischenzeitlich mit einer anderen Verwendung belegt wurde.

Durch die Berechnung eines Kostenparameters wie in Unteranspruch 11 angegeben, wird vorteilhaft erreicht, daß stets der kostengünstigste oder der aufgrund der Ausnutzung des Netzes geeignetste Pfad für den Aufbau der Verbindung verwendet werden kann.

Im folgenden wird die Erfindung anhand der Figuren 1-6 in zwei Ausführungsbeispielen erläutert. Es zeigt:

Figur 1       ein synchrones digitales Nachrichtenübertragungsnetz,

Figur 2       ein Schema mit der Multiplexstruktur des Nachrichtenübertragungsnetzes.

Figur 3       eine schematische Darstellung bestehender Verbindungen einer ersten Multiplexschicht in dem Nachrichtenübertragungsnetz aus Figur 1,

Figur 4       eine schematische Darstellung bestehender Verbindungen einer zweiten Multiplexschicht in dem Nachrichtenübertragungsnetz aus Figur 1,

Figur 5       ein Flußdiagramm des erfindungsgemäßen Verfahrens im ersten Ausführungsbeispiel und

Figur 6       ein Flußdiagramm einer besonders bevorzugten Ausführungsform der Erfindung eines zweiten Ausführungsbeispiels.

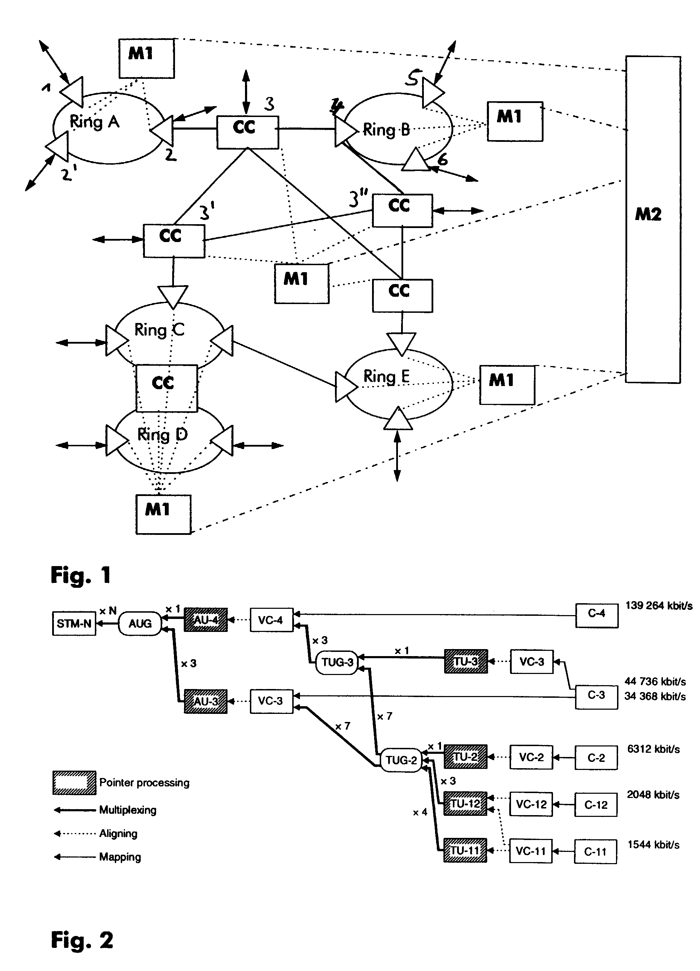

Ein synchrones digitales Nachrichtenübertragungssystem besteht üblicherweise aus einer Anzahl verschiedener, zu einem Nachrichtenübertragungsnetz verschalteter Netzelemente wie Add/Drop-Multiplexer (ADM) und Cross-Connect-Einrichtungen (CC). Die verschiedenen Netzelemente werden von mehreren (beispielsweise zwei) hierarchisch angeordneten Managementeinrichtungen M1, M2 gesteuert. Ein solches Nachrichtenübertragungsnetz ist in Figur 1 gezeigt. Dabei ist es üblich, daß mehrere Netzelemente jeweils zu Ringen (Ring A - Ring E) oder Teil netzen verschaltet sind. Mehrere Netzelemente gleichen Typs in jedem Ring oder Teilnetz werden von einer eigenen Managementeinrichtung M1 einer unteren Hirarchiestufe gesteuert, während eine Managementeinrichtung M2 einer oberen Hierarchiestufe für die Steuerung der Managementeinrichtung M1 der unteren Hirarchiestufe vorgesehen ist und das Zusammenspiel der einzelnen Ringe und Teil netze regelt. Verbindungen zwischen Netzelementen sind mit durchgezogenen Linien gezeichnet, Verbindungen zwischen der Managementeinrichtung M1 und den Netzelementen mit gestrichelten Linien und Verbindungen zwischen der Managementeinrichtung M2 und den Managementeinrichtungen M1 mit strichpunktierten Linien. Doppelpfeile bezeichnen die Zugangspunkte, an denen von außen auf des Netz zugegriffen werden kann oder an denen zu übertragende Nachrichten eingegeben werden. Cross-Connect-Einrichtungen sind mit CC bezeichnet, Add/Drop-Multiplexer sind als Dreiecke gezeichnet.

Die Aufgaben der Managementeinrichtungen M1, M2 sind, das Netz zu konfigurieren, Verbindungen einzurichten und abzubauen, Wartung von Hardware und Software sowie die Behandlung von Ausnahmesituationen. Ein Grundgedanke der Erfindung besteht nun darin, Verbindungen ohne ein Mitwirken der Managementeinrichten M1, M2 aufzubauen. Das Nachrichtenübertragungsnetz erhält eine Anforderung, eine neue Verbindung aufzubauen, sucht und findet mittels des erfindungsgemäßen Verfahrens einen geeigneten Pfad durch das Netz und baut über diesen Pfad die geforderte Verbindung auf. Eine auf diese Weise neu eingerichtete Verbindung kann den Managementeinrichtungen anschließend mitgeteilt werden.

In dem Nachrichtenübertragungsnetz wird ein Protokoll verwendet, gemäß dem das Netz in mehrere Multiplexschichten logisch strukturiert ist. In Figur 2 ist die Multiplexstruktur nach dem für synchrone digitale Hierarchie (SDH) festgelegten Protokoll schematisch gezeigt, welches in den Ausführungsbeispielen verwendet wird. Die grundlegende Übertragungseinheit ist eine als synchrones Transportmodul STM-N bezeichnete Rahmenstruktur. N steht für eine der Zahlen 1, 4, 16 oder ein größeres Vielfaches von 4 und bezeichnet die Übertragungskapazität (Größe) des Transportmodules. Im Ausführungsbeispiel werden nur Transportmodule der Größe STM-1 verwendet, die Erfindung ist jedoch mit jedem anderen Transportmodul ebenfalls ausführbar. Ebenso ist die Erfindung nicht auf die Multiplexstruktur von SDH beschränkt, vielmehr kann jedes andere Protokoll für synchrone digtale Nachrichtenübertragungsnetze mit hierarchischer Multiplexstruktur verwendet werden, wie beispielsweise das Protokoll für SONET (synchronous optical network).

Ein Transportmodul vom Typ STM-1 kann einen virtueller Container VC-4 transportieren. In diesen wiederum können drei Untereinheitem vom Typ TUG-3 gepackt werden, die jeweils wieder sieben Untereinheiten vom Typ TUG-2 beinhalten können. Durch diese Multiplexstruktur ist das Nachrichtenübertragungsnetz logisch in die erwähnten Multiplexschichten STM-N, VC-4, TUG-3 und TUG-2 strukturiert. Näheres zu dieser Multiplexstruktur ist in ITU-T Recommendation G.707 (3/96) ausgeführt.

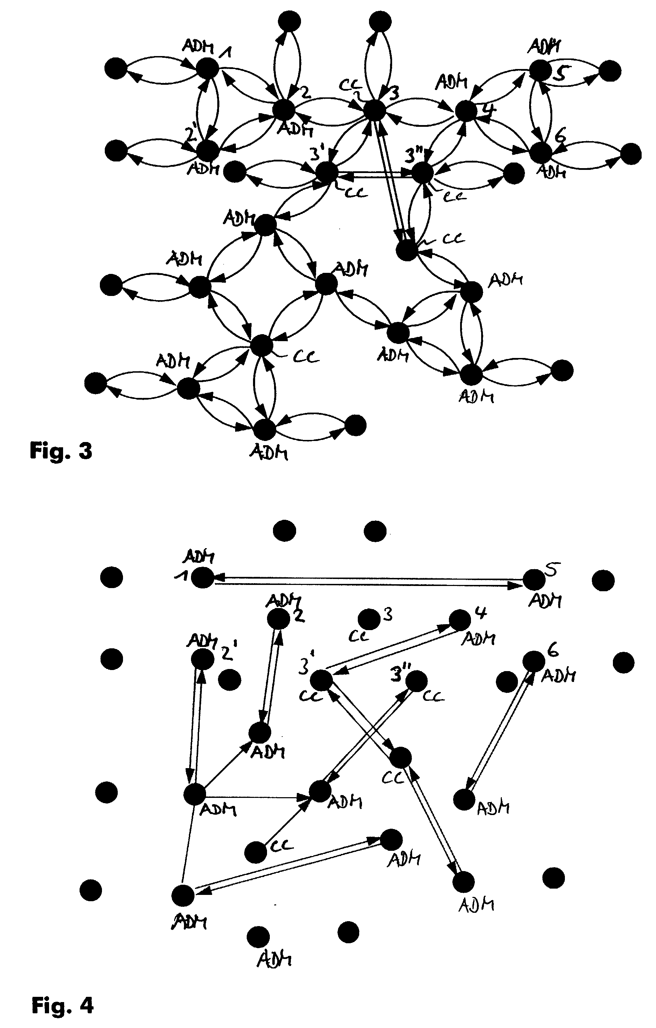

Das erfindungsgemäße Verfahren basiert auf einem Modell des Nachrichtenübertragungsnetzes, das im folgenden anhand der Ausführungsbeispiele und der Figuren 3 und 4 erläutert wird, und der geschilderten Multiplexstruktur. Die Figuren 3 und 4 zeigen dasselbe Netz wie Figur 1.

In dem Modell werden zunächst die direkten, physikalischen Verbindungen zwischen den Netzelementen betrachtet. Diese sind in Figur 3 als Pfeile dargestellt. Es handelt sich bei diesen direkten, physikalischen Verbindungen um bestehende Verbindungen der untersten Multiplexschicht STM-N. Mit A sind die Zugangspunkte des Netzes bezeichnet, die in Figur 1 als Doppelpfeile gezeichnet waren. Add/Drop-Multiplexer sind in Figur 2 mit ADM bezeichnet, Cross-Connect-Einrichtungen mit CC. Da es sich bei den direkten, physikalischen Verbindungen um bidirektionale Verbindungen handelt, ist zwischen zwei miteinander verbundenen Netzelementen je ein Pfeil in jede Richtung gezeichnet. Managementeinrichtung des Nachrichtenübertragungsnetzes sind in den Figuren 3 und 4 nicht gezeigt.

Als nächstes werden logische Verbindungen zwischen zwei Netzelementen des Nachrichtenübertragungsnetzes betrachtet, die dadurch entstehen, daß virtuelle Container VC-4 von zwischen den zwei Netzelementen angeordneten Netzelementen durchgeschaltet werden. Diese logischen Verbindungen sind in Figur 4 dargestellt. Eine solche Durchschaltung von Untereinheiten synchroner Transportmodule ist üblicherweise eine Aufgabe der Cross-Connect-Einrichtungen. Bei den in Figur 3 dargestellten logischen Verbindungen handelt es sich um Verbindungen der zweiten Multiplexschicht VC-4. Analog lassen sich Graphen mit den logischen Verbindungen der höheren Multiplexschichten TUG-3 und TUG-2 zeichnen. Ebenso können unidirektionale Verbindungen, Punkt-zu-Mehrpunkt-Verbindungen (broadcasted connections) und geschützte Verbindungen, sogenannte subnetwork connection protection (SNCP), als Pfeile zwischen ihren jeweiligen Endpunkten in die Graphen eingezeichnet werden.

In dem Modell werden also alle bestehenden Verbindungen zwischen den Netzelementen des Nachrichtenübertragungsnetzes berücksichtigt, und zwar in allen Multiplexschichten. Dabei ist zu bemerken, daß eine Verbindung einer höheren Multiplexschicht, beispielsweise der Multiplexschicht VC-4, einen Pfad in der nächstniedrigeren Multiplexschicht darstellt, beispielsweise in der Multiplexschicht STM-N. Als Pfad wird eine Kette einzelner Verbindungen bezeichnet. Es besteht also eine einseitige Korrelation zwischen den Multiplexschichten und zwar von einer höheren Multiplexschicht zu einer niedrigeren, nicht jedoch umgekehrt.

Die in dem Modell berücksichtigten Verbindungen, d.h. alle bestehenden Verbindungen in allen Multiplexschichten, werden im folgenden mit dem englischen Begriff Arc bezeichnet. Für jeden Arc kann eine freie Übertragungskapazität berechnet werden als Differenz aus der gesamten Übertragungskapazität eines Arcs, die in ITU-T Recommendation G.707 (3/96) für die jeweiligen Multiplexschichten festgelegt ist, und der momentanen Last des Arcs. Legt man nun alle Graphen aufeinander und berücksichtigt die freie Übertragungskapazität jedes einzelnen Arcs, so erhält man einen vielschichtigen Graph, der alle momentan möglichen Pfade in dem Nachrichtenübertragungsnetz in allen Multiplexschichten widerspiegelt.

Basierend auf diesem Modell besteht ein weiterer Grundgedanke der Erfindung darin, von einem sendenden Netzelement einen Rundruf an alle übrigen Netzelemente abzuschicken, um mögliche Pfade für eine Verbindung zwischen dem sendenden Netzelement und einem ausgewählten Netzelemenent zu identifizieren. Dieser Rundruf soll über bestehende Verbindungen aller für die aufzubauende Verbindung in Frage kommenden Multiplexschichten übertragen werden, die ausreichend freie Übertragungskapclzitöt aufweisen. Erfindungsgemäß wird dazu in Netzelementen, die den Rundruf empfangen für zumindest einen Teil der Ausgänge des jeweiligen Netzelementes in allen für die Verbindung in Frage kommenden Multiplexschichten, auf die das jeweilige Netzelement Zugriff hat, geprüft, ob ausreichend freie Übertragungskapazität zur Verfügung steht. D.h. jedes Netzelement prüft die Arcs, die es terminiert auf freie Übertragungskapazität. Über geeignete Arcs wird der Rundruf dann von den betreffenden Netzelementen weitergeleitet. Erreicht ein Rundruf das ausgewählte Netzelement, so ist ein möglicher Pfad identifiziert.

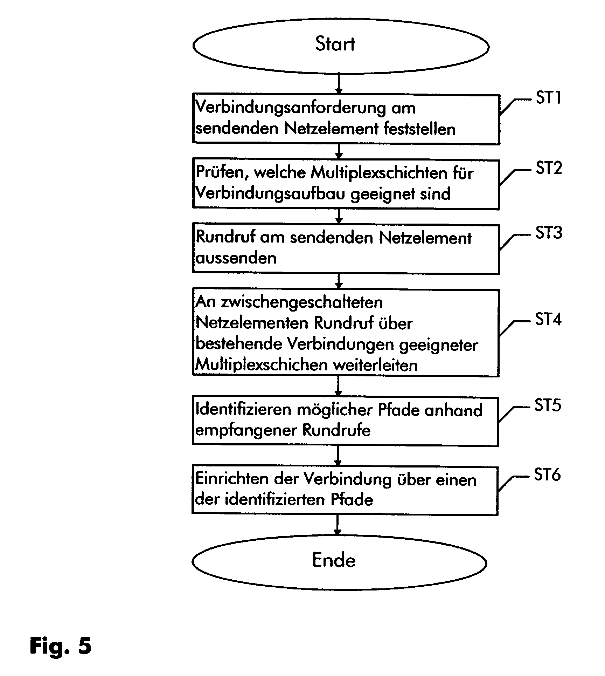

Im folgenden wird anhand der Figur 5 das erfindungsgemäße Verfahren in einem ersten Ausführungsbeispiel detailliert beschrieben. Zunächst wird in einem ersten Schritt ST1 eine Verbindungsanforderung an einem Netzelement festgestellt. Dieses Netzelemenet wird dadurch zum sendenden Netzelement, das Netzelement, zu dem die Verbindung hergestellt werden soll zum ausgewählten Netzelement. Das sendende Netzelement prüft dann in einem zweiten Schritt ST2, welche der Multiplexschichten für die aufzubauende Verbindung geeignet sind. Dazu wird verglichen, wieviel Übertragungskapazität für die aufzubauende Verbindung benötigt wird und wieviel Übertragungskapazität ein Container oder Transportmodul der jeweiligen Multiplexschicht zur Verfügung stellt.

In einem dritten Schritt ST3 verschickt das sendende Netzelement einen Rundruf an alle übrigen Netzelemente des Nachrichtenübertragungsnetzes. Vorteilhaft wird in dem Rundruf eine Verbindungsinformation übertragen, die angibt, welche der Multiplexschichten für den Aufbau der Verbindung geeignet sind. Dies kann z.B. auf die Art erfolgen, daß in dem Rundruf die für den Aufbau der Verbindung erforderliche Übertragungskapazität angegeben wird. Der Rundruf wird über alle bestehenden Verbindungen aller Multiplexschichten, auf die das sendende Netzelement Zugriff hat, die für den Aufbau der Verbindung geeignet sind und die genügend freie Übertragungskapazität aufweisen, ausgesendet. D.h. er wird über alle Arcs mit genügend freier Übertragungskapazität ausgesendet, die das sendende Netzelement terminiert. Das der Rundruf an alle übrigen Netzelemente verschickt wird, bedeutet nicht, daß alle übrigen Netzelemente zwangsläufig den Rundruf erhalten. Vielmehr bedeutet dies, daß als Zieladresse nicht ein bestimmtes Netzelement eingetragen ist, sondern die Zieladresse lautet: "an alle".

In einem vierten Schritt ST4 leiten Netzelemente, die den Rundruf empfangen, diesen über geeignete Arcs weiter. Hierzu kann in jedem empfangenden Netzelement wiederum für jede geeignete Multiplexschicht an jedem Ausgang geprüft werden, ob ein Pfad mit freier Übertragungskapazität besteht. Vorteilhaft ist, den Rundruf nur über solche Pfade weiterzuleiten. Es kann auch vorgegeben sein, daß alle oder nur bestimmte Rundrufe über bestimmte Ausgänge oder Arcs nicht weiterzuleiten sind. Weiter ist es vorteilhaft, in Abhängigkeit eines weiteren Kriterium wie beispielsweise einer in dem Netzelement gespeicherten Routing-Tabelle, den Rundruf über bestimmte Arcs nicht weiterzuleiten. So kann in der Routing-Tabelle bezeichnet sein, daß ein Rundruf mit einer bestimmten Zieladresse über bestimmte Arcs nicht weitergeleitet zu werden braucht, da über diese Arcs kein Pfad zu dem ausgewählten Netzelement gefunden werden kann, beispielsweise weil der Arc vom Ziel weg führt.

Auf diese Weise wird der Rundruf in dem Nachrichtenübertragungsnetz über verschiedene Pfade weitergeleitet. Erreicht der Rundruf über einen ersten Pfad das ausgewählte Netzelement, so ist dieser erste Pfad als für den Verbindungsaufbau geeignet identifiziert. Das ausgewählte Netzelement kann nun einen Timer starten und eine vorgegebene Zeitspanne auf weitere Rundrufe, die über andere Pfade übertragen werden, warten. Ist die Zeitspanne abgelaufen, so wird ein einem fünften Schritt ST5 einer der als geeignet identifizierten Pfade für den Verbindungsaufbau ausgewählt. In einem sechsten Schritte ST6 wird die gewünschte Verbindung dann über den ausgewählten Pfad ausgebaut. Dies erfolt vorteilhaft von dem ausgewählten Netzelement aus.

Bei einer vorteilhaften Weiterbildung der Erfindung wird in dem Rundruf ein Kostenparameter übertragen. Jedes Netzelement, das den Rundruf weiterleitet, berechnet die bei ihm anfallenden Verbindungskosten und addiert sie zu dem Kostenparameter. Das ausgewählte Netzelement kann dann aufgrund dieses Kostenparameters entscheiden, welche der identifizierten Pfade für den Verbindungsaufbau am kostengünstigsten ist und diesen auswählen. Die Berechnung der Verbindungskosten erfolgt in Abhängigkeit der momentanen Nutzung der Verbindungen und Netzelemente. Ein Arc, der nur noch wenig freie Übertragungskapazität aufweist ist teurer als ein freier oder fast freier Arc. Ein ausgelasteter Arc erhält als Kostenparameter den Wert Unendlich. Es können auch weitere Kriterien für die Berechnung des Kostenparameters herangezogen werden, wie die Anzahl der in einem Pfad liegenden Netzelemente oder eine vom Netzbetreiber angestebte Lastverteilung im Netz.

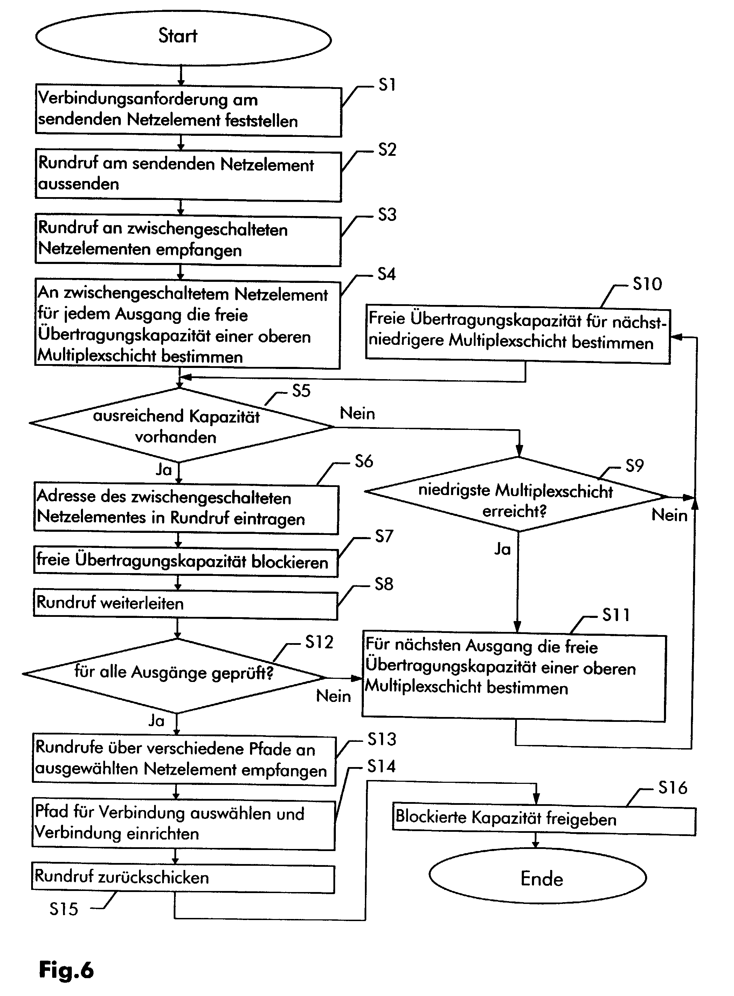

Im folgenden wird aufbauend auf dem ersten Ausführungsbeispiel anhand des Flußdiagrammes aus Figur 6 eine besonders bevorzugte Ausführung des erfindungsgemäßen Verfahrens in einem zweiten Ausführungsbeispiel erläutert. Hierzu werden in dem zweiten Ausführungsbeispiel nur die beiden untersten Multiplexschichten STM-N und VC-4 betrachtet. Für die höheren Multiplexschichten TUG-3 und TUG-2 ist das Verfahren jedoch analog anzuwenden.

Schritt S1: An einem beliebigen Netzelement des Nachrichtenübertragungsnetzes wird eine Verbindungsanforderung festgestellt. Die Anforderung kann der Auftrag eines Teilnehmers oder das Feststellen eines Verbindungsausfalles sein. Eine andere Möglichkeit für die Verbindungsanforderung ist, daß ein Netzelement einen Engpaß bei der Nachrichtenübertragung über eine bestehende Verbindung festellt und eine zweite, zu der bestehenden parallele Verbindung anfordert. Das Netzelement, an dem die Verbindungsanforderung festgestellt wird, wird nun zum sendenden Netzelement. Im Ausführungsbeispiel ist dies das mit 1 bezeichnete Netzelement, ein Add/Dropp-Multiplexer. Das Netzelement zu dem die Verbindung aufgebaut werden soll, wird zum ausgewählten Netzelement, im Ausführungsbeispiel mit 6 bezeichnet.

Schritt S2: Das sendende Netzelement 1 prüft nun wie im ersten Ausführungsbeispiel, welche Multiplexschichten für die aufzubauende Verbindung geeignet sind und schickt einen Rundruf an die übrigen Netzelemente ab, und zwar über alle Arcs, die es terminiert und die ausreichend freie Übertragungskapazität aufweisen. Im Ausführungsbeispiel werden also Rundrufe zu den Netzelementen 2, 2' in der ersten Multiplexschicht STM-N und zu dem Netzelement 5 in der zweiten Multiplexschicht VC-4 übertragen.

Schritt S3: Der Rundruf wird an den Netzelementen 2, 2' und 5 empfangen. Diese Netzelemente werden als zwischengeschaltete Netzelemente bezeichnet, da sie sich in einem möglichen Pfad zu dem ausgewählten Netzelement befinden. Die folgenden Schritte werden beispielhaft nur für das Netzelement 2 beschrieben, werden jedoch an allen Netzelementen durchgeführt, die den Rundruf empfangen.

Schritte S4 und S5: Das den Rundruf empfangende Netzelement 2 prüft nun verschiedene Arcs, die es terminiert auf ausreichend freie Übertragungskapazität, wobei ausreichend bedeutet, daß genug Übertragungskapazität frei sein soll, um die geforderte Verbindung aufzubauen. Dazu wird im Schritt S4 die freie Übertragungskapazität für einen Arc bestimmt und im Schritt S5 geprüft, ob diese für den Aufbau der gewünschten Verbindung ausreicht. Vorteilhaft beginnt die Prüfung auf der oberen Multiplexschicht und wird für einen Ausgang abgebrochen, sobald ein Arc als geeignet detektiert wurde. Dadurch wird die Bildung von Schleifen im Netz unterbunden. Alternativ können jedoch auch alle Arcs, die das jeweilige Netzelement terminiert auf freie Übertragungskapazität geprüft werden.

Schritt S6: Jedes Netzelement besitzt eine eindeutige Adresse. Ist von dem Netzelement 2 ein Arc mit ausreichend freier Übertragungskapazität gefunden, so trägt es seine Adresse in eine Liste, die in dem Rundruf enthalten ist ein. Dies ist vorteilhaft, da jeder Rundruf dadurch den Pfad enthält, über den er übertragen wurde. Somit enthält der Rundruf selbst die notwendigen Informationen, um eine Verbindung über den betreffenden Pfad aufzubauen.

Schritt S7: Die freie Übertragungskapazität oder zumindest der für den Aufbau der Verbindung erforderliche Anteil der freien Übertragungskapazität wird nun an dem Netzelement 2 blockiert. Dies ist vorteilhaft, da so gewährleistet ist, daß die erforderliche Übertragungskapazität auch weiterhin für den möglichen Aufbau der gewünschten Verbindung zur Verfügung steht, und nicht zwischenzeitlich für eine andere Verwendung belegt wird.

Schritt S8: Nun leitet das Netzelement 2 den Rundruf über die als geeignet ermittelten Arcs weiter; im Ausführungsbeispiel zu den Netzknoten 2' und 3. Dort werden wieder dieselben Schritte S3 bis S8 (oder auch S9 bis S12) durchgeführt.

Schritt S9: Wird in Schritt S5 für eine obere Multiplexschicht kein Arc mit freier Kapazität gefunden, so wird geprüft, ob eine niedrigere Multiplexschicht existiert und für den Aufbau der Verbindung geeignet ist. Ist dies nicht der Fall, so wird im Schritt S11 mit der Prüfung für den nächsten Ausgang fortgefahren, solange bis im Schritt S12 für alle Ausgänge des Netzelementes 2 alle in Frage kommenden Arcs geprüft wurden.

Schritt S10: Wenn die niedrigste Multiplexschicht noch nicht erreicht ist, wird mit der nächst niedrigeren fortgefahren, indem die freie Übertragungskapazität der bestehenden Verbindungen dieser Multiplexschicht bestimmt wird, um dann wieder mit Schitt S5 fortzufahren.

Entsprechend den Schritte S3 bis S12 wird der Rundruf an allen zwischengeschalteten Netzelementen empfangen und über geeignete Arcs weitergeleitet. Dadurch gelangt der Rundruf über verschiedene Pfade zu dem ausgewählten Netzelement 6. Dies können z.B. die Pfade 1-2-3-4-5-6, 1-2'-2-3-3'-3"-4-5-6 oder 1-5-6 sein. Am ausgewählten Netzelement 6 werden nun folgende Schritte durchgeführt:

Schritt S13: Der Rundruf wird über die verschiedenen Pfade empfangen. Diese Pfade sind damit als für den Verbindungsaufbau geeignete Pfade identifiziert.

Schritt S14: Von den identifizierten Pfaden wird ein Pfad für den Aufbau der Verbindung ausgewählt. Die Auswahl kann anhand des erwähnten Kostenparameters erfolgen. Dann wird die Verbindung eingerichtet. Das Einrichten kann derart erfolgen, daß über den ausgewählten Pfad eine Nachricht an die zwischengeschalteten Netzelemente, z.B. die Netzelemente 6 und 5, gesendet wird, mit der Anweisung, die gewünschte Verbindung durchzuschalten.

Schritt 15: Der Rundruf wird nun zurückgeschickt. Dies ist vorteilhaft, um alle Netzelemente davon in Kenntnis zu setzen, daß ein Pfad ausgewählt und die Verbindung eingerichtet wurde. Die übrigen Netzelemente geben daraufhin in Schritt S16 die blockierte Übertragungskapazität wieder frei. Alternativ ist es möglich, die blockierte Übertragungskapazität nach einer vorgegebenen Zeitspanne wieder frei zu geben. Mittels des zurückgeschickten Rundrufes kann auch das Einrichten der Verbindung über den ausgewählten Pfad initiiert werden, da der Rundruf wie bereits erwähnt alle für den Verbindungsaufbau nötigen Angaben enthält.

Bei einer weiteren vorteilhaften Ausführung der Erfindung besitzt jeder Rundruf eine eindeutige Vorgangsnummer. Empfängt ein Netzelement, welches einen ersten Rundruf bereits weitergeleitet hat, einen weiteren Rundruf mit derselben Vorgangsnummer, so bestehen zwei Möglichkeiten: Entweder verwirft es den weiteren Rundruf, wenn dessen Kostenparameter höher ist als der Kostenparameter des ersten Rundrufes, oder es gibt die aufgrund des ersten Rundrufes blockierte Übertragungskapazität frei, leitet den zweiten Rundruf weiter und blockiert die Übertragungskapazität auf dem zum Weiterleiten genutzten Pfad, wenn der Kostenparameter des ersten Rundrufes höher ist als der Kostenparameter des weiteren. Auf diese Weise wird die Bildung von Schleifen wirkungsvoll verhindert.

Ein Protokoll, das zur Signalisierung zwischen den Netzelementen des Nachrichtenübertragungsnetzes zur Ausführung des erfindungsgemäßen Verfahrens verwendet werden kann, wird im folgenden beschrieben. Es legt die Form des Rundrufes fest, der zwischen den Netzelementen ausgetauscht wird. Der Rundruf hat folgende Form:

$$Rundruf = (TransactionIndex; MessageType; SourceNode; DestinationNode;$$

$$ConnectionType; ArcListOfPath; PathCost),$$

wobei die einzelnen Felder des Rundrufes folgende Bedeutung haben:

| | |
|---|---|
| *TransactionIndex:* | Eindeutige Vorgangsnummer des Rundrufes; |
| *MessageType:* | Art und Zweck des Rundrufes, hier Rundruf zum Aufbau einer Verbindung; |
| *SourceNode:* | Adresse des sendenden Netzknotens; |
| *DestinationNode:* | Adresse des ausgewählten Netzknotens; |
| *ConnectionType:* | Art der aufzubauenden Verbindung und benötigte Übertragungskapazität; |
| *ArcListOfPath:* | Liste, in die jedes weiterleitende Netzelement seine Adresse einträgt, bevor es den Rundruf weiterleitet; |
| *PathCost:* | Kostenparameter des Pfades, über den der Rundruf übertragen wird. |

Der Rundruf wird vorzugsweise im sogenannten DCC übertragen, einem für SDH-Netze als Byte in der Kopfinformation von SDH-Rahmen festgelegten Dienstkanal.

Der zweite Rundruf, der von dem ausgewählten Netzelement zurückgesendet wird, wird *MessageType=DeBlockPorts* gesetzt, um anzuzeigen das der Zweck des zweiten Rundrufes ist, die blockierte Übertragungskapazität wieder freizugeben. Die Blockierung in den Netzelementen ist mit der eindeutigen Vorgangsnummer, der Transaktionsnummer verknüpft und diese ist bei dem ersten und dem zweiten Rundruf gleich.

Wenn ein Netzelement einen empfangenen Rundruf verwirft, beispielsweise weil bereits ein Rundruf mit der gleichen Transaktionsnummer und niedrigerem Kostenparameter eingegangen und bearbeitet ist, so ist es vorteilhaft, wenn es den zu verwerfenden Rundruf zuvor mit *MessageType=DeBlockPorts* zurückschickt. Dadurch werden blokkierte Übertragungskapazitäten schnellst möglich wieder freigegeben.

Ein besonderer Vorteil des erfindungsgemäßen Verfahrens besteht darin, daß ein Einschränken der für die Pfadsuche zugelassenen Multiplexschichten möglich ist. Dies kann für den Aufbau von virtuellen privaten Netzen von Interesse sein. Ein Netzwerkanbieter kann dadurch seinem Kunden ein virtuelles Netz zur Verfügung stellen, das der Kunde beispielsweise auf den Multiplexschichten TUG-2 und TUG-3 nach eigenen Wünschen konfigurieren kann. Der Zugang zu den darunterliegenden Multiplexschichten bleibt dem Kunden jedoch verwehrt. Für den Kunden liegt dann ein transparentes Netz vor, das er nach eigenem Ermessen konfigurieren kann. Der Netzwerkbetreiber braucht sich um die Konfigurationswünsche seines Kunden nicht mehr zu kümmern.

Ein Netzelement, das zur Durchführung des erfindungsgemäßen Verfahrens geeignet ist, verfügt über folgende Vorrichtungen:

- Mittel zum Feststellen einer Verbindungsanforderung,
- Mittel zum Prüfen, welche der Multiplexschichten für den Verbindungsaufbau geeignet sind,
- Mittel zum Bestimmen einer freien Übertragungskapazität für bestehende Verbindungen der geeigneten Multiplexschichten,
- Mittel zum Verschicken des Rundrufs und
- Mittel zum Weiterleiten eines empfangenen Rundrufes.

Bei dem Netzelement kann es sich um eine softwaregesteuerte Einrichtung handeln, deren Betrieb von einem Mikroprozessor, der ein Betriebssystem ausführt, gesteuert wird. Die einzelnen Mittel können dann als Programmodule des Betriebssystems ausgeführt sein.

Das Netzelement besitzt vorteilhaft einen Prozessor, der für die Abwicklung der Verbindungswünsche zuständig ist, und einen diesem Prozessor zugeordneten Speicher. Dies bedeutet, daß alle Rundrufe und Nachrichten, die mit dem Aufbau von Verbindungen zu tun haben, von diesem Prozessor bearbeitet werden. Der Prozessor kennt alle Verbindungen, die mit seinem Netzelement zu tun haben, d.h. alle Arcs, die das Netzelement terminiert. Anhand der bereits bestehenden Verbindungen können mittels eines entsprechenden Softwaremoduls die möglichen Pfade aus Sicht des Netzelementes errechnet werden. Ist z.B. für einen Verbindungsaufbau kein nutzbarer VC-4 mit freier Übertragungskapazität vorhanden, so wird einer reserviert und beim Verbindungsaufbau aufgebaut. Der Prozessor hat vorteilhafterweise direkten Zugriff auf die Kommunikationskanäle des Netzelementes.

Besonders vorteilhaft ist es, wenn der Prozessor sich aus den Informationen, die er mittels der Rundrufe erhält, eine Liste der möglichen weitergehenden Pfade aufbaut. Eine solche Liste wird als Routing-Tabelle bezeichnet. Auf Anfrage, d.h. wenn eine Verbindungsanforderung vorliegt oder ein Rundruf empfangen wird, braucht er die Liste nur aus dem Speicher zu lesen und erhält daraus Informationen, über welche Arcs ein Rundruf abzuschicken oder weiterzuleiten ist. Eine solche Routing-Tabelle kann auch über eine Managementeinrichtung erstellt, aktualisiert und verteilt werden. Weiter ist es möglich, daß die Netzelemente ihre Routing-Tabellen untereinander austauschen und abgleichen.

**Patentansprüche**

1.   Verfahren zum Aufbau einer Verbindung zwischen einem sendenden und einem ausgewählten Netzelement eines digitalen synchronen Nachrichtenübertragungsnetzes, wobei mittels eines von dem sendenden Netzelement an alle übrigen Netzelemente verschickten Rundrufs mögliche Pfade mit freier Übertragungskapazität zwischen dem sendenden und dem ausgewählten Netzelement identifiziert werden und anschließend die Verbindung über einen der identifizierten Pfade eingerichtet wird,
     **dadurch gekennzeichnet,**

- daß das Nachrichtenübertragungsnetz in mindestens zwei Multiplexschichten nach einer Hierarchie logisch strukuriert ist gemäß einem in dem Nachrichtenübertragungsnetz verwendeten Protokoll und daß jedes Netzelement auf zumindest einen Teil der Multiplexschichten Zugriff hat,

- daß geprüft wird, welche der Multiplexschichten für den Aufbau der Verbindung geeignet sind und

- daß der Rundruf über bestehende Verbindungen der geeigneten Multiplexschichten weitergeleitet wird, auf die das jeweils weiterleitende Netzelement Zugriff hat.

2.   Verfahren nach Anspruch 1, bei dem die Netzelemente, die den Rundruf empfangen, an zumindest einem Teil ihrer Ausgänge für die geeigneten Multiplexschichten, auf die sie Zugriff haben, prüfen, ob ein Pfad mit freier Übertragungskapazität existiert, und nur über solche Pfade den Rundruf weiterleiten.

3. Verfahren nach Anspruch 1 oder 2, bei dem der Rundruf in Abhängigkeit eines weiteren Kriterium nur über einen Teil der bestehende Verbindungen der geeigneten Multiplexschichten weitergeleitet wird.

4. Verfahren nach Anspruch 3, bei dem das weitere Kriterium eine in dem weiterleitenden Netzelement gespeicherte Routing-Tabelle ist.

5. Verfahren nach Anspruch 1, bei dem in dem Rundruf eine Verbindungsinformation übertragen wird, die angibt, welche der Multiplexschichten für den Aufbau der Verbindung geeignet sind.

6. Verfahren nach Anspruch 1, bei dem die Prüfung, ob ein Pfad mit freier Übertragungskapazität existiert, in der umgekehrten Reihenfolge der Hierarchie durchgeführt wird und die Prüfung pro Ausgang abgebrochen wird, sobald ein Pfad mit ausreichend freier Übertragungskapazität gefunden ist.

7. Verfahren nach Anspruch 1, bei dem jedes Netzelelement eine eindeutige Adresse besitzt und bei dem jeder Rundruf eine Liste enthält, in die die übrigen Netzelemente ihre Adresse eintragen, bevor sie den Rundruf weiterleiten.

8. Verfahren nach Anspruch 1, bei dem die Netzelemente, die den Rundruf weiterleiten, die freie Übertragungskapazität der Ausgänge in der Multiplexebene blockieren, in der sie den Rundruf weiterleiten.

9. Verfahren nach Anspruch 8 bei dem nach dem Einrichten der Verbindung von dem ausgewählten Netzelement ein zweiter Rundruf an alle übrigen Netzelemente verschickt wird und die übrigen Netzelemente nach Erhalt des zweiten Rundrufs die blockierte Übertragungskapazität wieder freigeben.

10. Verfahren nach Anspruch 1, bei dem ein Kostenparameter in Abhängigkeit von der freien Übertragungskapazität des jeweiligen Pfades berechnet wird und bei dem der Kostenparameter in dem Rundruf mitübertragen wird.

11. Verfahren nach Anspruch 10, bei dem von dem ausgewählten Netzelement anhand des Kostenparameters die Entscheidung getroffen wird, über welchen der identifizierten Pfade die Verbindung aufgebaut werden soll.

12. Verfahren nach Anspruch 1, bei dem jeder Rundruf eine eindeutige Vorgangsnummer enthält.

13. Verfahren nach Anspruch 10 und 12, bei dem ein Netzelement, daß einen ersten Rundruf weiterleitet, die eindeutige Vorgangsnummer und den Kostenparameter des ersten Rundrufes speichert und bei dem ein weiterer Rundruf mit derselben Vorgangsnummer nur dann weiterleitet wird, wenn der Kostenparameter des weiteren Rundrufes geringer ist als der Kostenparameter des ersten Rundrufes und anderenfalls der weitere Rundruf verworfen wird.

14. Verfahren nach Anspruch 1, bei dem eine Verbindung aufgrund einer Benutzeranforderung aufgebaut wird.

15. Verfahren nach Anspruch 1, bei dem ein zentrales Managementsystem von einer neu eingerichteten Verbindung informiert wird.

16. Netzelement zur Durchführung des Verfahrens nach Anspruch 1, mit folgenden Vorrichtungen:

- Mittel zum Feststellen einer Verbindungsanforderung,
- Mittel zum Prüfen, welche der Multiplexschichten für den Verbindungsaufbau geeignet sind,
- Mittel zum Bestimmen einer freien Übertragungskapazität für bestehende Verbindungen der geeigneten Multiplexschichten,
- Mittel zum Verschicken des Rundrufs und
- Mittel zum Weiterleiten eines empfangenen Rundrufes.

**Fig. 1**

**Fig. 2**

Fig. 3

Fig. 4

Start

Verbindungsanforderung am
sendenden Netzelement feststellen — ST1

Prüfen, welche Multiplexschichten für
Verbindungsaufbau geeignet sind — ST2

Rundruf am sendenden Netzelement
aussenden — ST3

An zwischengeschalteten
Netzelementen Rundruf über
bestehende Verbindungen geeigneter
Multiplexschichen weiterleiten — ST4

Identifizieren möglicher Pfade anhand
empfangener Rundrufe — ST5

Einrichten der Verbindung über einen
der identifizierten Pfade — ST6

Ende

**Fig. 5**

```
                    ┌─────────────────┐
                    │      Start       │
                    └─────────────────┘
                             │
        ┌────────────────────────────────────┐ ─ S1
        │ Verbindungsanforderung am          │
        │ sendenden Netzelement feststellen   │
        └────────────────────────────────────┘
                             │
        ┌────────────────────────────────────┐ ─ S2
        │ Rundruf am sendenden Netzelement   │
        │ aussenden                           │
        └────────────────────────────────────┘
                             │
        ┌────────────────────────────────────┐ ─ S3
        │ Rundruf an zwischengeschalteten     │
        │ Netzelementen empfangen             │
        └────────────────────────────────────┘
                             │
        ┌────────────────────────────────────┐ ─ S4
        │ An zwischengeschaltetem Netzelement │
        │ für jedem Ausgang die freie         │
        │ Übertragungskapazität einer oberen  │
        │ Multiplexschicht bestimmen          │
        └────────────────────────────────────┘
```

**An zwischengeschaltetem Netzelement für jedem Ausgang die freie Übertragungskapazität einer oberen Multiplexschicht bestimmen** — S4

**Freie Übertragungskapazität für nächst-niedrigere Multiplexschicht bestimmen** — S10

**ausreichend Kapazität vorhanden** — S5 / Nein / Ja

**Adresse des zwischengeschalteten Netzelementes in Rundruf eintragen** — S6

**niedrigste Multiplexschicht erreicht?** — S9 / Ja / Nein

**freie Übertragungskapazität blockieren** — S7

**Rundruf weiterleiten** — S8

**Für nächsten Ausgang die freie Übertragungskapazität einer oberen Multiplexschicht bestimmen** — S11

**für alle Ausgänge geprüft?** — S12 / Nein / Ja

**Rundrufe über verschiedene Pfade an ausgewählten Netzelement empfangen** — S13

**Pfad für Verbindung auswählen und Verbindung einrichten** — S14

**Blockierte Kapazität freigeben** — S16

**Rundruf zurückschicken** — S15

**Ende**

**Fig.6**